# EUROPEAN PATENT APPLICATION

(11) **EP 2 045 573 A2**
(43) Date of publication of application: **08.04.2009**
(21) Application number: 08017210.9
(22) Date of filing: 30.09.2008
(51) Int. Cl.: G01B 11/06

(54) **Phase-information extraction method**

(30) Priority: 03.10.2007 JP 2007259394
(71) Applicant: Olympus Corporation, Tokyo 151-0072 (JP)
(72) Inventor: Sakamoto, Takamitsu, Hino-shi Tokyo 191-0041 (JP); Fukuda, Hiroshi, Hino-shi Tokyo 191-0053 (JP); Kobayashi, Masayuki, Hachioji-shi Tokyo 192-0023 (JP)
(74) Representative: von Hellfeld, Axel

(57) **Abstract**

Only phase information of a measurement object is extracted with superior precision from a phase-information image in which background phase information is superimposed on phase information of the measurement object. A method of extracting phase information of a measurement object includes a region-specifying step of specifying a region in which a measurement object exists and a region in which no measurement object exists in a phase-information image containing measurement objects, showing a two-dimensional distribution of phase information to be measured, a background-image creating step of creating a background phase-information image by interpolating the phase information of the region in which the measurement object exists on the basis of the phase information of the region in which no measurement object exists, specified in the region-specifying step; and a difference calculating step of calculating a difference between the background phase-information image created in the background-image creating step and the phase-information image.

## Description

### BACKGROUND OF THE INVENTION

### 1. FIELD OF THE INVENTION

The present invention relates to a phase-information extraction method.

This application is based on Japanese Patent Application No. 2007-259394, the content of which is incorporated herein by reference.

### 2. DESCRIPTION OF RELATED ART

In the related art, there are methods of evaluating the thickness of an object by determining the optical phase shift from interference fringes formed by interference between reference light and light transmitted through or reflected from a measurement object.

One known method of evaluating the phase shift in an object involves obtaining phase information from two or more bright-field images at different focal positions (for example, see Australian Patent Application, Publication No. 2004201109A1).

However, there is a problem when using the method described above; that is, when measuring an object in a culture dish such as a cultured cell, phase information of not only the measurement object whose thickness is to be evaluated but also is also superimposed and is thus included in the calculation.

For example, when measuring the thickness of cells (measurement objects) in a culture dish, it is necessary to extract phase information associated only with the cells from phase information obtained using the method described above. In this case, background phase information caused by a bias component which is superimposed, deformation or thickness distribution of a substrate on which the measurement object is mounted, etc. needs to be removed. In particular, when evaluating the thickness of cells in a culture medium in a plastic culture dish, it has been found that this background phase information cannot be ignored.

### BRIEF SUMMARY OF THE INVENTION

The present invention has been conceived in light of the circumstances described above, and an object thereof is to provide a method of extracting phase information of a measurement object, in which it is possible to extract, with superior precision, only phase information of the measurement object from a phase-information image in which background phase information is superimposed on the phase information of the measurement object.

In order to realize the objects described above, the present invention provides the following solutions.

One aspect of the present invention is a method of extracting phase information of a measurement object, including a region-specifying step of specifying a region in which a measurement object exists and a region in which no measurement object exists in a phase-information image containing measurement objects, showing a two-dimensional distribution of phase information to be measured; a background-image creating step of creating a background phase-information image by interpolating the phase information of the region in which the measurement object exists on the basis of the phase information of the region in which no measurement object exists, specified in the region-specifying step; and a difference calculating step of calculating a difference between the background phase-information image created in the background-image creating step and the phase-information image.

According to the aspect described above, the region in which the measurement object exists, which is specified in the region-specifying step, is interpolated in the background-image creating step on the basis of the phase information of the region in which no measurement object exists, to create the background phase-information image. In other words, when background noise of the tilted phase is contained in the phase-information image, a difference of the phase exists in the periphery of the specified measurement object. In such a case, background noise that varies so as to smoothly join the phase information in the periphery can be assumed to exist also in the region where the measurement object exists. Therefore, the background phase-information image is created in the background-image creating step by interpolating the phase information in the region in which the measurement object exists, and by calculating the difference between the phase- information image and the background phase-information image in the difference calculating step, it is possible to extract phase information of the measurement object, from which the background noise in the region in which the measurement object exists has been removed.

In the aspect described above, the region-specifying step may include a phase-information image acquiring step of acquiring two phase-information images formed of contrast images in which the signs of the phase during interference of an observed image of the measurement object are reversed; and a subtracting step of subtracting the difference between the two phase-information images acquired in the phase-information image acquiring step.

By doing so, it is possible to specify the region in which the measurement object exists with superior precision, and it is possible to remove background noise also from the phase information in the region in which the measurement object exists, thus enabling extraction of accurate phase information.

The present invention affords an advantage in that it is possible to extract, with superior precision, only phase information of a measurement object from a phase-information image in which background phase information is superimposed on phase information of the measurement object.

### BRIEF DESCRIPTION OF THE SEVERAL VIEWS OF THE DRAWINGS

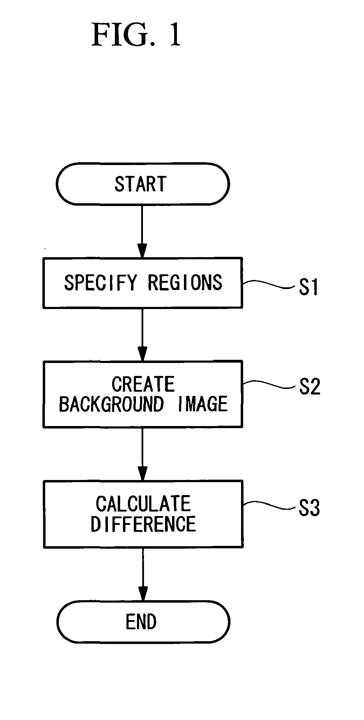

Fig. 1 is a flowchart showing a method of extracting phase information of a measurement object according to an embodiment of the present invention.

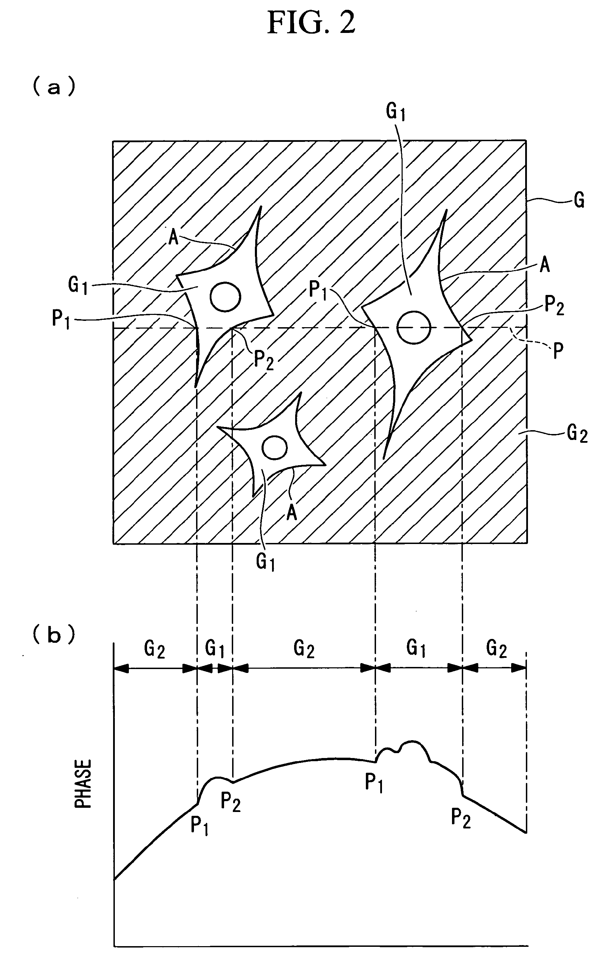

Fig. 2 is an illustration for explaining a region-specifying step in the phase-information extraction method in Fig. 1, wherein (a) shows an example of a phase-information image, and (b) shows a phase distribution of a pixel row along an arbitrary straight line in the phase-information image.

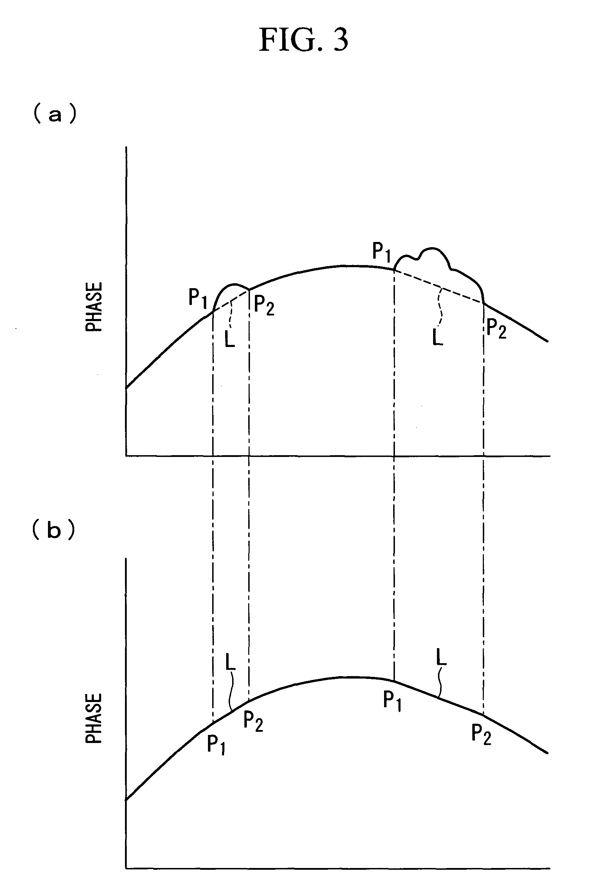

Fig. 3 is an illustration for explaining a background-image creating step in the phase-information extraction method shown in Fig. 1, wherein (a) shows a phase distribution of a pixel row along an arbitrary straight line in the phase-information image, and (b) shows a phase distribution in the created background phase-information image.

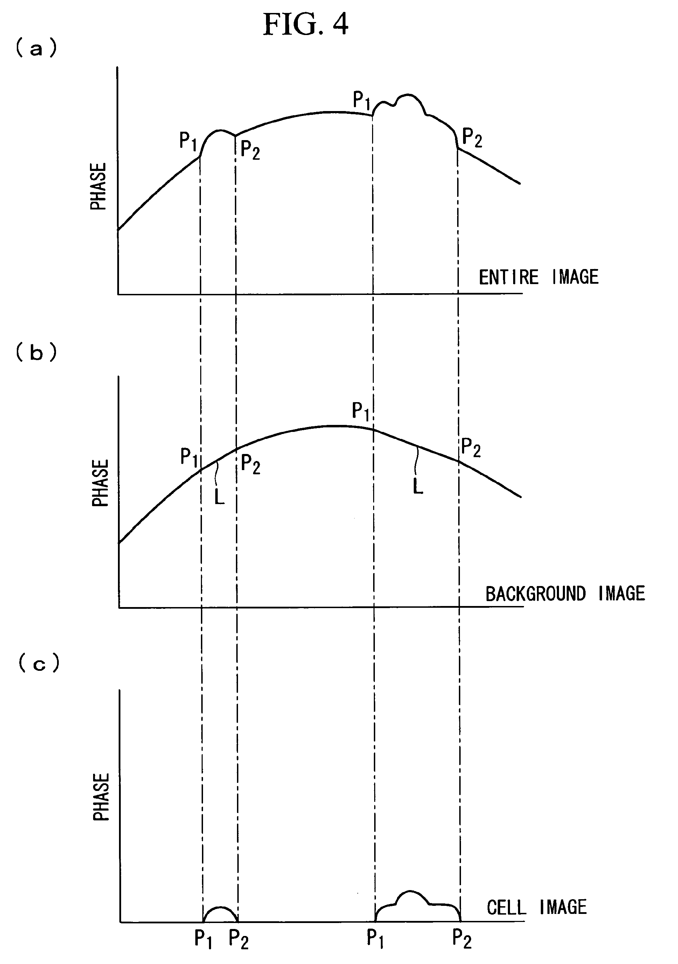

Fig. 4 is an illustration for explaining a difference calculating step in the phase-information extraction method in Fig. 1, wherein (a) shows a phase distribution of a pixel row along an arbitrary straight line in the phase-information image, (b) shows a phase distribution in the created background phase-information image, and (c) shows a phase-information image of cells obtained as a result of the difference calculation.

### DETAILED DESCRIPTION OF THE INVENTION

A method of extracting phase information of a measurement object according to an embodiment of the present invention will be described below with reference to Fig. 1.

In order to obtain a phase-information image, a conventional method using interference fringes or a method using two or more bright-field images at different focal positions may be employed.

The phase-information extraction method according to this embodiment is a method of extracting phase information of cells A, serving as the measurement objects. As shown in Fig. 1, the method includes a region-specifying step S1 of specifying regions in which cells A exist and a region in which no cells A exist, from an entire phase-information image G to be measured (hereinafter referred to as entire image G), which contains the cells A; a background-image creating step S2 of creating a background phase-information image (hereinafter referred to as background image) by estimating background noise in the regions in which the cells A exists, specified in the region-specifying step S1; and a difference calculating step S3 of calculating the difference between the entire image G and the background image.

In the region-specifying step S1, while acquiring the entire image G, two bright-field images whose contrasts are reversed are acquired by shifting the focal plane at the same position towards the front and the rear in the optical axis direction, containing the cells A, with the focal point aligned on the measurement object, and the difference of brightness information between these bright-field images is calculated. Then, a region with substantially zero intensity from an intensity distribution of the image subjected to computational processing is specified as a region G₂ in which no cell A exists, and other regions are specified as regions G₁ in which cells A exist.

In this case, the two bright-field images can be selected from the two or more bright-field images at different focal positions.

In the background-image creating step S2, for the phase information for a pixel row along an arbitrary straight line P in the entire image G in (a) of Fig. 2, for example, for a phase distribution like that shown in (b) of Fig. 2, and as shown in (a) of Fig. 3, for the region G₂ in which no cell A exists, the phase information thereof is directly used as the background image, and for the regions G₁ in which cells A exist, the phase information at both ends P₁ and P₂ of those regions G₁ is interpolated with a straight line L. By doing so, it is possible to create a background phase distribution, as shown in (b) of Fig. 3. By repeating this process for all pixel rows, it is possible to create a background image.

When interpolating the phase information with the straight line L, it is preferable to acquire an interpolating line by using multiple points of the phase which can be collinearly approximated, not by joining one point of the phase information of the nearest region G₂ with respect to the regions G₁ in which cells A exist.

In this case, a filtering process such as an average process for the phase information row of the region G₂ in which no cell A exits may be performed in advance.

Then, in the difference calculating step S3, as shown in Fig. 4, by calculating the difference of the background image in (b) from the entire image G in (a), it is possible to extract a phase-information image (hereinafter referred to as cell image) of only the cells A, from which the background noise has been removed as shown in (c).

With the phase-information extraction method according to this embodiment, an advantage is afforded in that it is possible to easily extract a cell image formed of phase information of the cells A only, in which the background noise is removed, from the entire image G containing background noise that is not uniform over the entire image.

In this embodiment, in the phase distribution for a pixel row along an arbitrary straight line P in the entire image G, linear interpolation is performed in the regions G₁ where cells A exist. Instead of this, however, interpolation may be performed using any type of curve.

As a curve interpolation method, a method using a multidimensional function formula or a method using the Fourier transform may be employed.

The step S1 of specifying the regions in which the measurement objects exist is not limited to the method described above; edge extraction of a separately acquired phase image or differential image may be performed. In this way, the cell regions may be specified. Also the step of obtaining the phase is not limited to the method described above; it is also possible to obtain the phase by using a conventional interferometer or the like.

## Claims

1. A method of extracting phase information of a measurement object, comprising:
a region-specifying step of specifying a region in which a measurement object exists and a region in which no measurement object exists in a phase-information image containing measurement objects, showing a two-dimensional distribution of phase information to be measured;
a background-image creating step of creating a background phase-information image by interpolating the phase information of the region in which the measurement object exists on the basis of the phase information of the region in which no measurement object exists, specified in the region-specifying step; and
a difference calculating step of calculating a difference between the background phase-information image created in the background-image creating step and the phase-information image.

2. A method of extracting phase information of a measurement object according to Claim 1, wherein the region-specifying step comprises:
a bright-field image acquiring step of acquiring two bright-field images whose contrasts of an observed image of the measurement object are reversed; and
a subtracting step of subtracting the difference between the two bright-field images acquired in the bright-field image acquiring step.
